# EUROPÄISCHE PATENTANMELDUNG

(11) **EP 4 790 209 A1**
(43) Veröffentlichungstag der Anmeldung: **12.08.2026**
(21) Anmeldenummer: 26154704.6
(22) Anmeldetag: 28.01.2026
(51) Int. Cl.: E04H 17/26, B65H 49/32, B65H 54/00, B65H 75/44

(54) **GERÄT FÜR DIE UNTERSTÜTZUNG DES AUF- UND ABBAUS VON WEIDEZÄUNEN**

(30) Priorität: 29.01.2025 AT 152025
(71) Anmelder: Kiesa Anlagenbau GmbH, 3340 Waidhofen an der Ybbs (AT)
(72) Erfinder: Fuchsluger, Christoph, 3340 Waidhofen an der Ybbs (AT); Feigl, Thomas, 3340 Waidhofen an der Ybbs (AT)

(57) **Zusammenfassung**

Die Erfindung betrifft ein Gerät für die Unterstützung des Aufund Abbaus von Weidezäunen, wobei das Gerät mehrere maschinell antreibbare Haspeln (4), einen Führungsteil (6) und eine maschinell antreibbare Kreuzgewindespindel (9) mit einem Schlitten (12) umfasst, wobei der Führungsteil (6) zum Führen der Bewegung des aufzuwickelnden Längsmaterials (5) vorgesehen ist, und die Kreuzgewindespindel dazu vorgesehen ist den Führungsteil (6) periodisch hin und her zu bewegen, wobei die Achsen der Haspeln (4) parallel zueinander verschoben ausgerichtet sind. Um auf wirtschaftlich vorteilhafte Weise Robustheit und einfache Wartung zu erreichen, weist der Führungsteil (6) eine Durchgangsöffnung (8) auf, durch welche hindurch alle Stränge von aufzuwickelndem Längsmaterial (5) verlaufen, wobei die Umfangsbegrenzung der Durchgangsöffnung (8) zwei gerade Streckenabschnitte (10) umfasst, welche parallel zueinander ausgerichtet sind und zueinander parallel in Achsrichtung der Haspeln (4) versetzt sind, und länger sind als der Achsabstand zwischen den beiden am weitesten voneinander beabstandeten Haspeln (4).

## Beschreibung

Die Erfindung betrifft ein Gerät für die Unterstützung des Auf- und Abbaus von Weidezäunen.

Beispielsweise die WO 9848135 A1 und die EP 3 633 122 B1 zeigen ein auf einer fahrbaren Arbeitsmaschine, wie beispielsweise einem Traktor, mitführbares Gerät, welches mehrere zu Drehung um ihre Achsen antreibbare Haspeln aufweist, die zum Auf- und Abwickeln von flexiblem Längsmaterial, nämlich einem Zaunband oder einem Zaundraht dienen. Die Antriebskraft für die Drehbewegung der Haspeln wird an die Haspeln über jeweils eine Rutschkupplung übertragen, sodass das Längsmaterial unter Überwindung von Reibung auch bei stillstehendem Antrieb abgewickelt werden kann, und dass es bei laufendem Antrieb durch diesen nicht zu sehr gespannt werden kann. Das Gerät weist weiters Führungsösen auf, durch welche hindurch das flexible Längsmaterial beim Auf- bzw. Abwickeln durchgeführt wird um in passender Lage gehalten zu sein. Entsprechend der WO 9848135 A1 liegen die Haspeln auf einer gemeinsamen Achse in Axialrichtung hintereinander. Entsprechend der EP 3 633 122 B1 sind die Achsen der einzelnen Haspeln parallel zueinander verschoben ausgerichtet und angeordnet, und die Haspeln befinden sich in Axialrichtung auf zueinander gleichen Positionen. Die Praxis hat gezeigt, dass vor allem beim Abbau von Zäunen aus Bandmaterial beim Aufwickeln zu Schwierigkeiten kommt, weil sich die Wickelwindungen nicht gleichmäßig verteilt auf die Haspel gelangen, sondern schmale Stapel bilden, die dann kippen, wodurch es zu lockeren Bereichen und losen Schlaufen kommt. Das Problem wird bedeutender je länger die verwendeten Haspeln sind.

Durch die GB 108407 A wird schon 1917 öffentlich vorgeschlagen, das Wickeln von Längsmaterial auf einer Haspel durch einen Führungsteil zu unterstützen, durch welchen beim Aufwickeln der an die Haspel herankommende Faden hindurchgeführt wird, wobei dieser Führungsteil periodisch parallel zur Axialrichtung um etwa die axiale Länge der zu bildenden Wicklung hin und hier bewegt wird, wobei diese periodische Bewegung durch eine in immer gleiche Richtung zu Rotation um ihre Achse angetriebene Kreuzgewindespindel angetrieben wird, mit welcher der Führungsteil als axial beweglicher Schlitten nach Art einer Spindelmutter in Eingriff ist. Dieses Prinzip der Führung eines aufzuwickelnden Längsmaterials wird inzwischen vom Aufwickeln feinster Fäden bis zum Aufwickeln stärkster Seile und Ketten von Hebezeugen verbreitet angewendet.

Ein Beispiel für die Anwendung zum Weidezaunabbau zeigt die die EP 4001194 B1. Es wird ein Handgerät gezeigt, welches zum Spannen, Fixieren, Auf- und Abwickeln und elektrisch Kontaktieren von flexiblem Längsmaterial wie Zaundraht oder Zaunband dient. Es umfasst nur eine einzige Haspel. Durch eine Handkurbel ist sowohl Rotationsbewegung der Haspel antreibbar, als auch Rotationsbewegung einer Kreuzgewindespindel, welche einen Führungsteil periodisch parallel zu ihrer Axialrichtung hin und her verschiebt, welcher eine Öffnung aufweist durch welche das flexible Längsmaterial beim Aufwickeln hindurchgeführt wird, um in sauberen Wickellagen auf der Haspel angeordnet zu werden.

Die GB 2218687 A1 zeigt ein Gerät für die Unterstützung des Auf- und Abbaus von Weidezäunen, wobei mehrere Haspeln mit parallel zueinander verschobenen Achsen vorhanden sind, und kein Führungsteil für das auf- bzw. abzuwickelnde Längsmaterial vorgeschlagen wird.

Die US 3934655 A zeigt ein Gerät für die Unterstützung des Auf- und Abbaus von Weidezäunen wobei das Gerät mehrere maschinell antreibbare Haspeln und einen gegenüber den Achsen der Haspeln still stehenden Führungsteil umfasst, wobei die Haspeln zum Auf- und Abwickeln von flexiblem Längsmaterial für Zäune vorgesehen sind und der Führungsteil zum Führen der Bewegung des aufzuwickelnden Längsmaterials vorgesehen ist, wobei die Achsen der Haspeln parallel zueinander verschoben ausgerichtet sind. Der Führungsteil weist eine Reihe von Durchgangsöffnungen auf, durch welche hindurch jeweils ein Strang von aufzuwickelndem Längsmaterial verläuft, wobei die Durchgangsöffnungen durch jeweils zwei Paare von zueinander parallelen Wänden begrenzt sind.

Die US 5582216 A zeigt ein Gerät für die Unterstützung des Auf- und Abbaus von Weidezäunen, wobei mehrere Haspeln axial hintereinander auf einer gemeinsamen Achse angeordnet sind, und das auf- bzw. abzuwickelnde Längsmaterial durch eine Öffnung in einem gegenüber der Achse unbeweglichen Führungsteil geführt wird, wobei die Öffnung eine längliche rechteckige Querschnittsfläche aufweist, deren Längsrichtung parallel zur Achsrichtung der Haspeln ausgerichtet ist.

Die der Erfindung zu Grunde liegende Aufgabe besteht darin, ein auf einer fahrbaren Arbeitsmaschine mitführbares Gerät, welches mehrere maschinell antreibbare Haspeln umfasst, die zum Auf- und Abwickeln von flexiblem Längsmaterial für Zäune dienen, mit Führungen für das flexible Längsmaterial auszustatten, welche bewirken, dass Längsmaterial beim Aufwickeln in regelmäßigen stabilen Lagen auf der Haspel angeordnet wird. Unter Beachtung enger wirtschaftlicher Grenzen sind bei der Lösung der Aufgabe Robustheit und einfache Wartung besonders wichtige Zielsetzungen.

Für das Lösen der Aufgabe wird davon ausgegangen, dass das auf Haspeln aufzuwickelnde flexible Längsmaterial bei Bewegung zu der jeweiligen Haspel von einem Führungsteil geführt wird, welcher durch eine sich um ihre Achse angetrieben drehende Kreuzgewindespindel periodisch parallel zur Längsrichtung der jeweiligen Haspelachse hin und her bewegt wird. Um mit wenigen Bauteilen auszukommen und dabei gute Robustheit und hohe Flexibilität bezüglich Anzahl von Haspeln sowie Vorspannung und Ausrichtung des flexiblen Längsmaterials zu erreichen, wird vorgeschlagen, die Achsen der Haspeln parallel zueinander verschoben auszurichten, dabei die Haspeln in Axialrichtung auf zueinander gleichen Positionen auszurichten, und einen Führungsteil vorzusehen, welcher eine Durchgangsöffnung aufweist, durch welche alle zu den aufwickelnden Haspeln führenden Stränge von aufzuwickelndem Längsmaterial verlaufen, wobei die Umfangsbegrenzung der Durchgangsöffnung zwei gerade Streckenabschnitte umfasst, welche parallel zueinander ausgerichtet sind und zueinander parallel zu Achsrichtung der Haspeln versetzt sind, und länger sind als der Achsabstand zwischen den beiden am weitesten voneinander beabstandeten aufwickelnden Haspeln.

Die Erfindung wird einschließlich vorteilhafter optionaler weiterer Merkmale anhand von stilisierten Zeichnungen von beispielhaften vorteilhaften erfindungsgemäßen Geräten, veranschaulicht und näher erläutert.

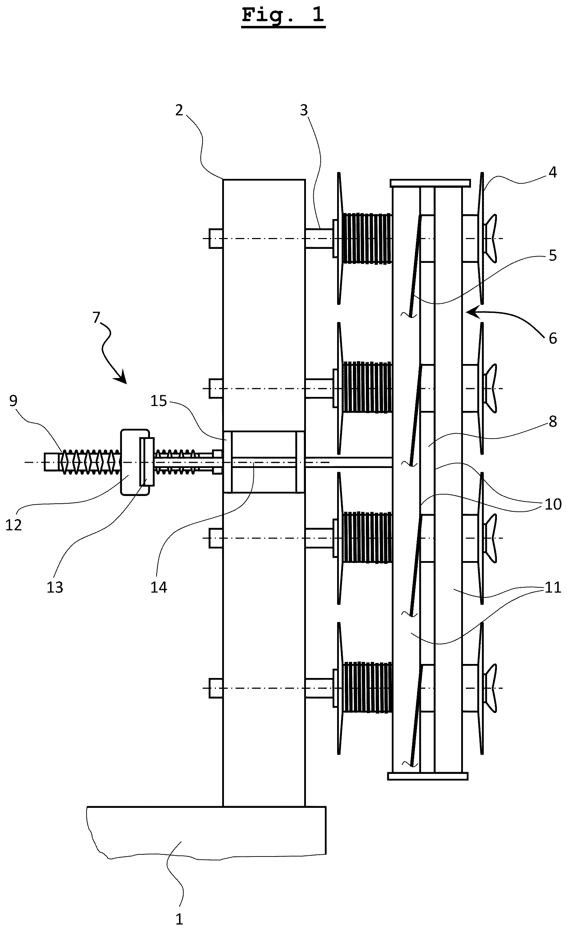

- Fig. 1: zeigt den für das Verständnis der Erfindung wesentlichen Bereich eines erfindungsgemäßen Gerätes aus horizontaler, normal zu den Achsen der Haspeln liegender Blickrichtung.

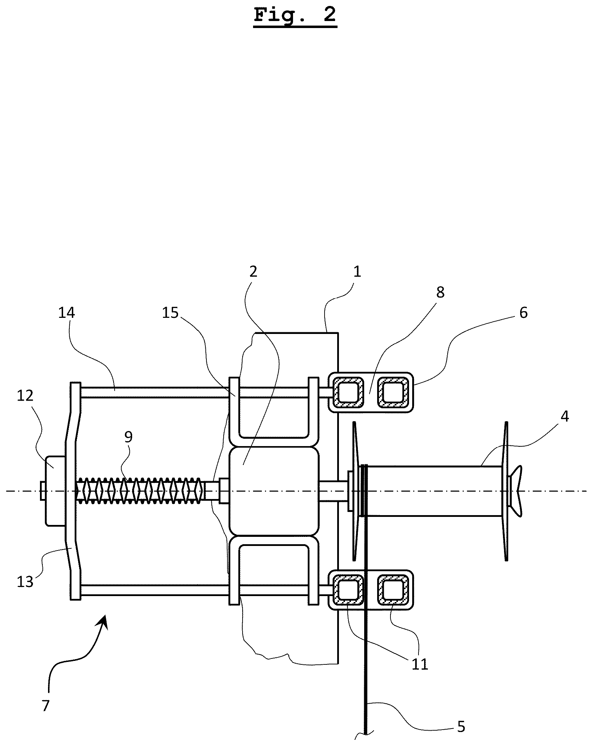

- Fig. 2: zeigt den Bereich von Fig. 1 in Teilschnittansicht von oben.

Das dargestellte beispielhafte erfindungsgemäße Gerät umfasst unter anderem einen Grundrahmen 1, ein Antriebsgehäuse 2, Haspelwellen 3 mit Haspeln 4, flexibles Längsmaterial 5, einen Führungsteil 6 und eine Antriebsbaugruppe 7 für das Halten und geführte Bewegung des Führungsteils 6.

Vom Grundrahmen 1 aus ragt das säulenartig schlank ausgebildete Antriebsgehäuse 2 vertikal nach oben hin empor. Aus dem Antriebsgehäuse 2 ragen die Haspelwellen 3 heraus, welche in einer Reihe vertikal übereinander angeordneten sind und dabei horizontal und parallel zueinander ausgerichtet sind. Die Haspelwellen 3 sind durch Antriebsbauteile, welche sich im Antriebsgehäuse 2 befinden, zu Drehung um ihre jeweilige Achse antreibbar. Die Haspelwellen 3 tragen jeweils eine Haspel 4, welche dazu bestimmt ist, das für den Bau von Weidezäunen zu verwendende flexible Längsmaterial 5 (eine Schnur, ein Draht oder ein Band) aufzuwickeln bzw. abzuwickeln.

Der Führungsteil 6 dient vor allem dazu, beim Aufwickeln von flexiblem Längsmaterial 5 auf eine Haspeln 4 den an die Haspel 4 herankommenden Abschnitt des Längsmaterials 5 in der zur Achsrichtung der der Haspel 4 parallel liegenden Richtung so zu positionieren, dass sich unabhängig davon, aus welcher Richtung das Längsmaterial ursprünglich herangezogen wird, die Wicklungen auf der Haspel 4 gleichmäßig einigermaßen über deren ganze axiale Länge verteilen.

Um das erreichen zu können weist der Führungsteil 6 eine Durchgangsöffnung 8 auf, durch welche alle Stränge von aufzuwickelndem Längsmaterial 5 hindurch geführt werden, und er wird durch die Antriebsbaugruppe 7, welche eine Kreuzgewindespindel 9 umfasst, periodisch parallel zu den Achsen der Haspeln 4 hin und her bewegt.

Die Umfangsbegrenzung der Durchgangsöffnung 8 im Führungsteil 6, durch welche alle zu den Haspeln 4 führenden Stränge von Längsmaterial 5 hindurch verlaufen, umfasst zwei gerade Streckenabschnitte 10, welche parallel zueinander ausgerichtet sind und zueinander parallel in Achsrichtung der Haspeln 4 versetzt sind, und länger sind als der Achsabstand zwischen den beiden am weitesten voneinander beabstandeten Haspeln 4. Dadurch sind bei sehr einfacher Bauweise und kostengünstiger Bauweise große Robustheit der Funktion und große Flexibilität bezüglich der Anzahl der aktiv arbeitenden Haspeln 4 und bezüglich der Richtungen aus denen das Längsmaterial 5 herankommen kann, erreichbar. Der Führungsteil 6 kann dazu einfach aus zwei zueinander parallel ausgerichteten geraden langen Stäben 11 gebildet sein, welche an ihren Enden miteinander verbunden sind, und dabei normal zu der Richtung der Achsen der Haspeln 4 ausgerichtet sind und in der Richtung der Achsen der Haspeln 4 parallelen Richtung zueinander beabstandet sind. Bevorzugt sind die Stäbe dabei parallel zu jener Richtung ausgerichtet, entlang welcher die Haspeln 4 aufgereiht sind.

Im dargestellten beispielhaften und vorteilhaften Fall umfasst das Gerät zwei Führungsteile 6, welche spiegelbildlich zueinander angeordnet sind, wobei die Spiegelebene parallel zu jener Ebene liegt oder jene Ebene ist, in welcher die Achsen der Haspeln 4 liegen. Durch diese Ausführung wird hohe Flexibilität bei der Anwendung erzielt.

Die die Führungsteil 6 haltende und periodisch bewegende Antriebsbaugruppe 7 umfasst neben der Kreuzgewindespindel 9 einen Schlitten 12, ein Verbindungsblech 13, Gleitstangen 14 und Führungsösen 15.

Die Kreuzgewindespindel 9 ist einseitig am Antriebsgehäuse 7 drehbar gelagert gehalten, und durch Antriebsteile, die sich im Antriebsgehäuse 2 befinden zu Drehung um ihre Achse antreibbar. Der Schlitten 12 umringt nach Art einer Gewindemutter den Umfang der Kreuzgewindespindel 9. Gemäß dem an sich bekannten Prinzip des Zusammenwirkens zwischen Kreuzgewindespindel 9 und dazu kompatiblem Schlitten 12 wird der Schlitten 12 periodisch entlang der Achse der Kreuzgewindespindel 9 hin und her verschoben, wenn die Kreuzgewindespindel 9 relativ zum Schlitten um ihre Achse gedreht wird, wobei die Umkehr der Verschieberichtung des Schlittens am Ende des Verschiebebereiches automatisch erfolgt, ohne dass sich dazu die Drehrichtung der Kreuzgewindespindel ändern muss.

Der Schlitten 12, das Verbindungsblech 13, die Gleitstangen 14 und die Führungsteile 6 sind starr miteinander verbunden, sodass sie also eine in sich starre Baugruppe bilden. Dabei ist das Verbindungsblech 13 unmittelbar starr mit dem Schlitten 12 und einem Ende jeder der Gleitstangen 14 verbunden, und die Gleitstangen 14 sind mit dem jeweils zweiten Ende unmittelbar mit dem Führungsteil 6 verbunden.

Die Führungsösen 15 sind starr mit dem Antriebsgehäuse 2 verbunden, und sie weisen Durchgangsöffnungen auf, durch welche die Gleitstangen 14 hindurch ragen und an deren Mantelflächen die Gleitstangen längsbeweglich geführt gehalten sind. Die Gleitstangen 14 und die Kreuzgewindespindel 9 sind dabei parallel zu den Achsen der Haspeln 4 ausgerichtet.

Im dargestellten vorteilhaften Fall steht die Kreuzgewindespindel 9 an der den Haspeln 4 gegenüberliegenden Seite vom Antriebsgehäuse 2 ab. Damit werden Kollisionsprobleme bei der Führung des flexiblen Längsmaterials 5 vermieden, und auch Beschädigungsgefahr für die Antriebsbaugruppe 7 durch Kollisionen mit Gegenständen die in der Landschaft stehen (z.B. Zaunpfähle oder Äste) vermindert.

Bevorzugt sind die Haspeln 4 über Rutschkupplungen mit einer Antriebsquelle für ihre Drehbewegung verbunden. Dadurch kann auf einfache Weise die Gefahr für Überlastung von Bauteilen durch zu starkes Ziehen des Längsmaterials 5 einfach vermieden werden, womit die Bauteile der Antriebsbaugruppe 7 relativ leicht und schlank ausgeführt werden können.

Bevorzugt ist (auch) die Kreuzgewindespindel 9 über eine Rutschkupplung mit einer Antriebsquelle für ihre Drehbewegung verbunden. Auch damit wird Gefahr von Beschädigung stark vermindert, und es kann mit leichteren, schlankeren Bauweisen das Auslangen gefunden werden.

Typischerweise gehören zu den im Antriebsgehäuse angeordneten Antriebsbauteilen eine zur Bewegung angetriebene Kette und Kettenräder, die durch die Kette angetrieben werden, und die Übertragungsglieder zu den Haspelwellen 3 und der Kreuzgewindespindel 9 darstellen.

Es ist vorteilhaft, die Rotationsbewegung der Kreuzgewindespindel 9 und die Rotationsbewegungen der Haspeln 4 zu koppeln.

## Patentansprüche

1. Gerät für die Unterstützung des Auf- und Abbaus von Weidezäunen wobei das Gerät mehrere maschinell antreibbare Haspeln (4), einen Führungsteil (6) und eine maschinell antreibbare Kreuzgewindespindel (9) mit einem Schlitten (12) umfasst, wobei die Haspeln (4) zum Auf- und Abwickeln von flexiblem Längsmaterial (5) für Zäune vorgesehen sind, der Führungsteil (6) zum Führen der Bewegung des aufzuwickelnden Längsmaterials (5) vorgesehen ist, und die Kreuzgewindespindel dazu vorgesehen ist, den Führungsteil (6) periodisch hin und her zu bewegen, wobei die Achsen der Haspeln (4) parallel zueinander verschoben ausgerichtet sind, wobei die Haspeln (4) in Axialrichtung auf zueinander gleichen Positionen ausgerichtet sind,
**dadurch gekennzeichnet, dass**
der Führungsteil (6) eine Durchgangsöffnung (8) aufweist, durch welche hindurch bei bestimmungsgemäßer Verwendung alle Stränge von aufzuwickelndem Längsmaterial (5) verlaufen, wobei die Umfangsbegrenzung der Durchgangsöffnung (8) zwei gerade Streckenabschnitte (10) umfasst, welche parallel zueinander ausgerichtet sind und zueinander parallel in Achsrichtung der Haspeln (4) versetzt sind, und länger sind als der Achsabstand zwischen den beiden am weitesten voneinander beabstandeten Haspeln (4).

2. Gerät nach Anspruch 1, **dadurch gekennzeichnet, dass** es ein Antriebsgehäuse (2) aufweist, aus welchem die die Haspeln (4) tragenden Haspelwellen (3) herausragen, wobei die Haspelwellen (3) in einer gerade verlaufenden Reihe im Wesentlichen vertikal übereinander angeordnet sind und dabei horizontal und parallel zueinander ausgerichtet sind, und dass zu Ausrichtung dieser Reihe die zwei geraden Streckenabschnitte (10) der Umfangsbegrenzung der Durchgangsöffnung (8) parallel ausgerichtet sind.

3. Gerät nach Anspruch 2, **dadurch gekennzeichnet, dass** die Kreuzgewindespindel (9) parallel zu den Achsen der Haspeln (4) ausgerichtet ist, und von der den Haspeln (4) gegenüberliegenden Gehäuseseite des Antriebsgehäuses (2) von diesem absteht.

4. Gerät nach einem der Ansprüche 1 bis 3, **dadurch gekennzeichnet, dass** es zwei Führungsteile (6) aufweist, welche spiegelbildlich zueinander angeordnet sind, wobei die Spiegelebene parallel zu einer Ebene liegt, in welcher zwei der Achsen der Haspeln (4) liegen.

5. Gerät nach einem der Ansprüche 1 bis 4, **dadurch gekennzeichnet, dass** die Kreuzgewindespindel (9) über eine Rutschkupplung mit einer Antriebsquelle für ihre Drehbewegung verbunden ist.
